# FASCICULE DE BREVET EUROPEEN

(11) **EP 1 263 528 B1**
(45) Date de publication et mention de la délivrance du brevet: **26.11.2003**
(21) Numéro de dépôt: 01919524.7
(22) Date de dépôt: 16.03.2001
(51) Int. Cl.: B01J 19/00

(54) **MODULE ET APPAREIL POUR LA SYNTHESE DE MOLECULES ORGANIQUES OU AUTRES**
MODUL UND VORRICHTUNG ZUR SYNTHESE ORGANISCHER ODER ANDERER MOLEKÜLE
MODULE AND APPARATUS FOR SYNTHESIS OF ORGANIC MOLECULES OR THE LIKE

(30) Priorité: 17.03.2000 FR 0003478
(43) Date de publication de la demande: 11.12.2002
(73) Titulaire: CENTRE NATIONAL DE LA RECHERCHE SCIENTIFIQUE, 75974 Paris (FR)
(72) Inventeur: NEIMARK, Jean, F-67000 Strasbourg (FR)
(74) Mandataire: Nuss, Pierre
(86) Numéro de dépôt international: FR0100802
(87) Numéro de publication internationale: WO01068237

(56) Documents cités:
- EP-A- 0 963 791
- WO-A-98/57181
- WO-A-99/13988
- FR-A- 2 664 602
- US-A- 5 866 342

## Description

La présente invention concerne le domaine de la synthèse de molécules, en particulier organiques, notamment en phase solide et en grand nombre, et a pour objet un module pour la réalisation de telles synthèses, ainsi qu'un appareil comprenant au moins un tel module.

Par le document EP-A-0 208 641, on connaît déjà un multi-synthétiseur de peptides semi-automatique en phase solide, comprenant une pluralité de réacteurs individuels reliés chacun à un doseur volumétrique et disposés pour former plusieurs voies de synthèse parallèles indépendantes. Cet appareil ne peut mettre en oeuvre qu'une seule chimie de synthèse, soit BOC, soit Fmoc, et utilise exclusivement la technique dite de Merifield. Lesdits réacteurs sont disposés à l'air libre et leur arrangement parallèle espacé résulte en un encombrement total important.

Ensuite, par le document FR-A-2 664 602, on connaît un automate de synthèse simultanée de plusieurs peptides identiques ou différents en phase solide.

Cet automate comporte une pluralité de réacteurs non isolés regroupés sur plusieurs plateaux et comprend des moyens mobiles mécanisés pour la préparation et l'injection de solvants et d'acides aminés.

Il en résulte un appareil de structure complexe et nécessitant une maintenance continue.

Il convient de noter qu'aucun des appareils précités ne comporte de moyen pour le contrôle de la température dans les différents réacteurs, ni pour un ajustement de ladite température en fonction des réactions en cours ou à initier.

De plus, une multiplication importante des réacteurs dans les appareils précités pour en augmenter les performances entraînerait un accroissement proportionnel de la complexité de la structure de l'appareil et de l'encombrement de ce dernier, incompatible avec une utilisation en laboratoire et nécessitant un réaménagement de la constitution et de la configuration internes dudit appareil.

Enfin, les appareils précités prévoient pour le décompactage, le mélange et la mise en suspension du milieu présent dans lesdits réacteurs l'injection de gaz pour effectuer un bullage, ce qui évite bien entendu la destruction du support et des produits de synthèse, mais peut également s'avérer insuffisant en cas d'agglomération importante et intime et ne permet pas de garantir une bonne homogénéité et une mise en suspension du milieu solide/liquide dans les différents réacteurs.

La présente invention a notamment pour but de pallier au moins certains des inconvénients mentionnés ci-dessus et de proposer une solution permettant de réaliser des synthèses simultanées de molécules, en particulier organiques, en phase solide, selon des méthodes ou des stratégies de synthèse variées, dans des contenants de synthèse distincts et soumis notamment à des conditions physiques ou thermodynamiques identiques et contrôlées, tout en autorisant un accès aisé aux intérieurs desdits réacteurs et une association modulaire d'un grand nombre de contenants de synthèse sans aboutir à une structure trop complexe.

A cet effet, la présente invention a pour objet un module pour la synthèse de molécules organiques ou non sur ou en phase solide, principalement constitué par plusieurs, préférentiellement au moins deux et au plus dix, réacteurs de synthèse séparés, arrangés selon une disposition circulaire avec une répartition équiangulaire et formés, chacun, d'un corps tubulaire formant une chambre de réaction délimitée dans sa partie inférieure par une paroi poreuse amovible, destinée à retenir le matériau formant support de synthèse, d'une tête d'injection et de détente formant bouchon de fermeture supérieur pour le corps tubulaire, et d'une embase de fermeture et de vidange montée de manière amovible dans un prolongement inférieur du corps tubulaire et assurant le maintien périphérique étanche de la paroi de rétention, chaque réacteur étant pourvu d'un échangeur thermique en contact intime périphérique avec le corps tubulaire au moins au niveau de la partie de la chambre destinée à contenir le milieu et les composés réactionnels et d'un condenseur en contact intime périphérique avec le corps au niveau d'une partie de la chambre s'étendant au-dessus de celle contenant le milieu et les composés réactionnels et en-dessous de la tête d'injection, et ledit ensemble de réacteurs étant monté dans une structure isolante entourant lesdits réacteurs au moins au niveau desdits échangeurs et desdits condenseurs, l'action de ces derniers étant similaire pour tous les réacteurs du module et l'isolation étant homogène pour l'ensemble des réacteurs, de telle manière que lesdits réacteurs soient soumis en permanence à des conditions thermiques identiques.

Elle a également pour objet un appareil pour la synthèse de molécules organiques en phase solide, à fonctionnement automatique ou semi-automatique comprenant au moins un module du type précité.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue partielle en élévation latérale d'un module selon l'invention, dépourvu de structure isolante, ne comprenant que deux réacteurs dont l'un est dépourvu d'embase et l'autre de tête d'injection et surmonté de la structure support portant les organes rotatifs d'agitation et leurs organes d'entraînement ;
la figure 2 est une vue similaire à celle de la figure 1 montrant plus particulièrement les échangeur et condenseur et la structure d'assemblage et de support ;
la figure 3 est une vue similaire à celle de la figure 2 montrant en plus la structure isolante ;
la figure 4 est une vue de dessus de l'objet représenté sur la figure 2 ;
la figure 5 est une vue de dessous de l'objet représenté sur la figure 2 ;
les figures 6A et 6B sont respectivement des vues de dessus et en coupe longitudinale d'un corps tubulaire d'un réacteur ;
la figure 7 est une vue de détail, à une échelle différente, de l'embase représentée sur la figure 1 ;
les figures 8A, 8B et 8C sont respectivement des vues en élévation latérale, de dessus et de dessous de la tête d'injection représentée sur la figure 1 ;
la figure 9A est une vue de dessus de la structure support et des organes d'entraînement des organes rotatifs d'agitation représentés sur la figure 1 et la figure 9B est une représentation schématique de dessus montrant la disposition des organes de transmission de mouvement, par exemple sous forme de courroies, pour les organes rotatifs d'agitation de la figure 1 ;
la figure 10 est une représentation synoptique d'un appareil de synthèse selon l'invention ;
la figure 11 est une vue en coupe et en élévation latérale du corps tubulaire et de l'embase d'un contenant formant chambre d'échange et de distribution et faisant partie de l'appareil de synthèse représenté sur la figure 10 ;
la figure 12 est une vue en élévation latérale par transparence et partiellement en coupe d'un ensemble échangeur / condenseur / structure isolante pour un contenant du type représenté sur la figure 11, et
la figure 13 est une vue en élévation latérale du contenant de la figure 11 pourvu d'une tête d'injection et d'un mécanisme d'entraînement de l'organe d'agitation.

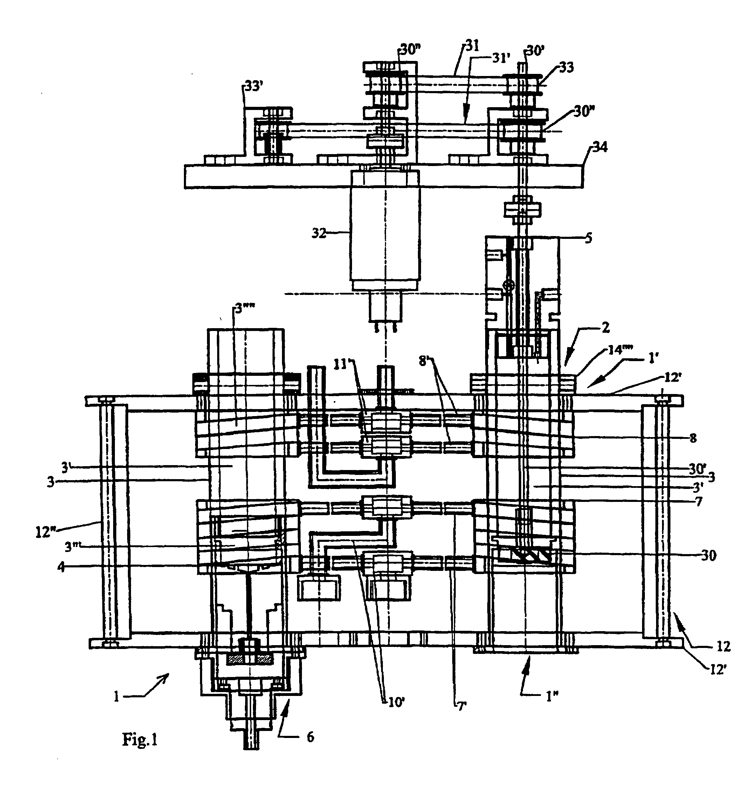

Comme le montrent notamment les figures 1 à 5 des dessins annexés, le module 1 pour la synthèse de molécules, en particulier organiques, sur phase solide, par exemple sur résine, présente une structure compacte et peu encombrante, avec une disposition optimisée, régulière et homogène de ses différents éléments constitutifs, notamment de ses réacteurs.

Conformément à l'invention, ledit module 1 est essentiellement constitué par plusieurs, préférentiellement au moins deux et au plus dix, réacteurs de synthèse 2 séparés, arrangés selon une disposition circulaire avec une répartition équiangulaire et formés, chacun, d'un corps tubulaire 3 formant une chambre de réaction 3' délimitée dans sa partie inférieure par une paroi poreuse amovible 4, destinée à retenir le matériau formant support de synthèse, d'une tête 5 d'injection et de détente formant bouchon de fermeture supérieur pour le corps tubulaire 3, et d'une embase 6 de fermeture et de vidange montée de manière amovible dans un prolongement inférieur 3" du corps tubulaire 3 et assurant le maintien périphérique étanche de la paroi de rétention 4, chaque réacteur 2 étant pourvu d'un échangeur thermique 7 en contact intime périphérique avec le corps tubulaire 3 au moins au niveau de la partie 3''' de la chambre 3' destinée à contenir le milieu et les composés réactionnels et d'un condenseur 8 en contact intime périphérique avec le corps 3 au niveau d'une partie 3 "" de la chambre 3' s'étendant au-dessus de celle 3''' contenant le milieu et les composés réactionnels et en-dessous de la tête d'injection 5, et ledit ensemble de réacteurs 2 étant monté dans une structure isolante 9 entourant lesdits réacteurs 2 au moins au niveau desdits échangeurs 7 et desdits condenseurs 8, l'action de ces derniers étant similaire pour tous les réacteurs 2 du module 1 et l'isolation étant homogène pour l'ensemble des réacteurs 2, de telle manière que lesdits réacteurs 2 soient soumis en permanence à des conditions thermiques identiques.

De manière avantageuse, le module 1 comprendra entre trois et sept réacteurs 2, chacun de ces derniers présentant par exemple un volume interne d'environ 60 ml pour un volume utile d'environ 20 ml.

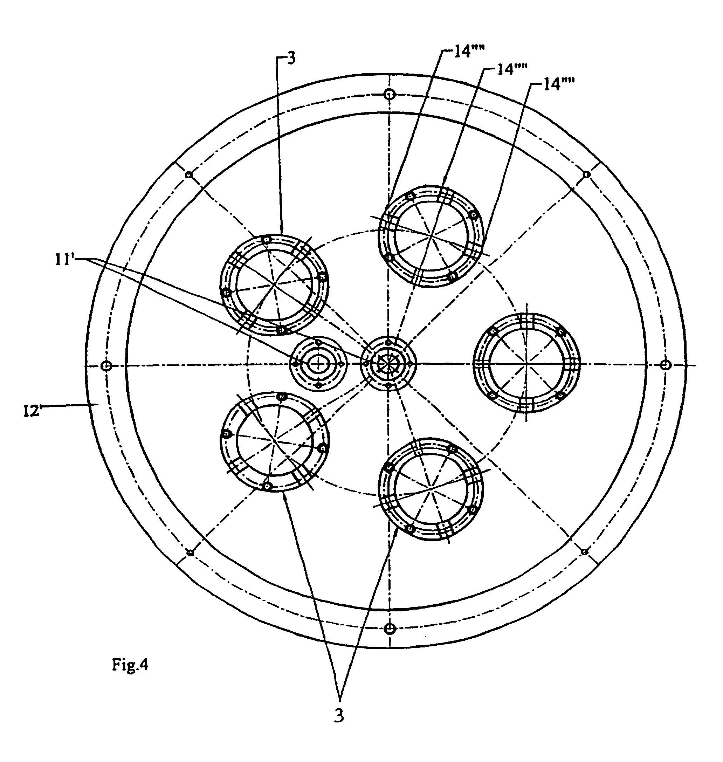

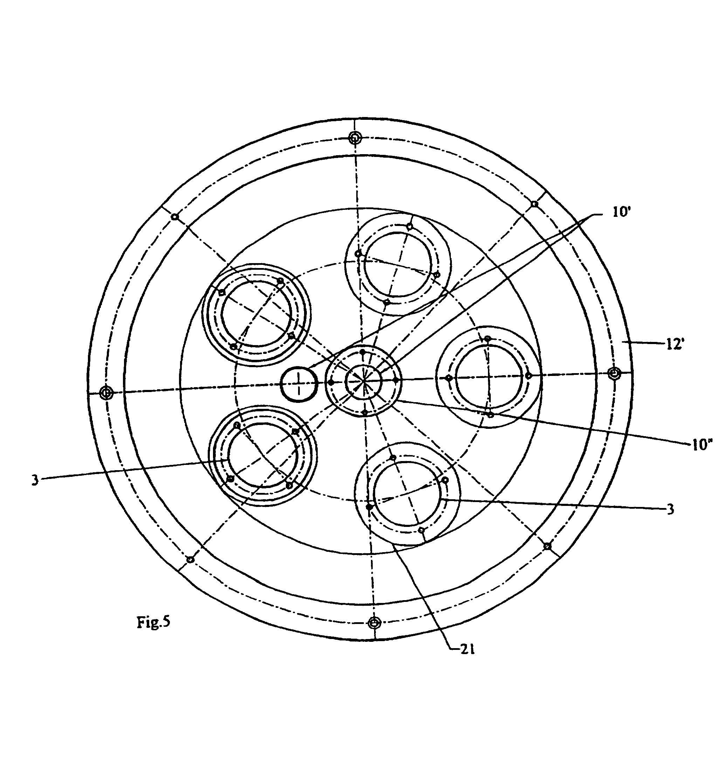

Comme le montrent les figures 4 et 5 des dessins annexés, ces réacteurs sont arrangés selon une disposition circulaire et avec une répartition équiangulaire (espacement angulaire constant entre deux réacteurs voisins).

Chaque corps tubulaire 3 présentera une épaisseur suffisamment mince pour assurer une transmission thermique rapide entre l'échangeur 7 et le condenseur 8 montés sur l'extérieur dudit corps et l'intérieur de ce dernier, et une longueur suffisante pour autoriser un gradient de température important entre les portions de paroi en contact avec le milieu réactionnel et les extrémités dudit corps en contact avec l'embase 6 et la tête d'injection 5, avec des déperditions par transmission longitudinale limitées.

Le corps tubulaire 3, ainsi que son prolongement 3" formé d'un seul tenant avec lui, sera réalisé en un matériau résistant à des températures négatives et positives très écartées, à des variations et à des gradients de température de fortes valeurs, ainsi qu'aux substances réactionnelles et aux produits dérivés ou de synthèse pouvant être obtenus. Le polytrifluorchloréthylène répond aux critères précités et pourra par exemple former le corps 3 et son prolongement 3" ainsi que la tête d'injection 5 et les parties de l'embase 6 en contact avec le milieu réactionnel.

Pour pouvoir réaliser une condensation efficace en association avec un chauffage important, le condenseur 8 et l'échangeur 7 d'un même réacteur 2 sont physiquement séparés et montés sur ce dernier avec un espacement longitudinal mutuel, le cas échéant avec interposition d'un matériau isolant, et reliés à des lignes 10, 11 d'alimentation et d'évacuation de fluide(s) caloporteur(s) distinctes, la température du fluide, préférentiellement liquide, pour les condenseurs 8 pouvant varier de la température ambiante à environ 15° C (par exemple de l'eau délivrée par le réseau de distribution d'eau courante) et la température du fluide gazeux pour les échangeurs 7 pouvant varier entre environ - 80° C et environ + 100° C, ce qui permet d'établir des conditions de température idéales pour la totalité des réactions habituelles en chimie organique.

Selon une variante de réalisation préférentielle de l'invention, représentée aux figures 1, 2 et 3 des dessins annexés, les condenseurs 8 et les échangeurs 7 sont constitués, chacun, par une pluralité de spires hélicoïdales adjacentes d'un conduit métallique à section rectangulaire ou carrée, les embouts 7', 8' d'alimentation et d'évacuation de tous les condenseurs 8 et échangeurs 7 étant dirigés radialement vers l'intérieur de la disposition circulaire formée par l'ensemble de réacteurs 2 et raccordés à des portions centrales 10', 11' de connection et de distribution radiale de lignes d'alimentation et d'évacuation 10, 11 de fluide(s) caloporteur(s), les lignes d'alimentation et d'évacuation 10, 11 se branchant sur lesdites portions centrales de connection et de distribution 10', 11' par les deux côtés ou faces opposé(e)s 1', 1" dudit module 1 et la configuration desdites portions centrales 10', 11' entraînant des pertes de charge équivalentes et des chemins de circulation équivalents, d'une part, pour tous les condenseurs 8 et, d'autre part, pour tous les échangeurs 7.

Les différents échangeurs 7 et condenseurs 8 avec leurs portions centrales respectives 10' et 11' constitueront deux circuits de circulation de fluides à structure rigide.

Les lignes d'alimentation et d'évacuation 10 reliées aux portions centrales 10' seront isolées thermiquement et pourront, par exemple, consister en des lignes connues sous la désignation "dewar".

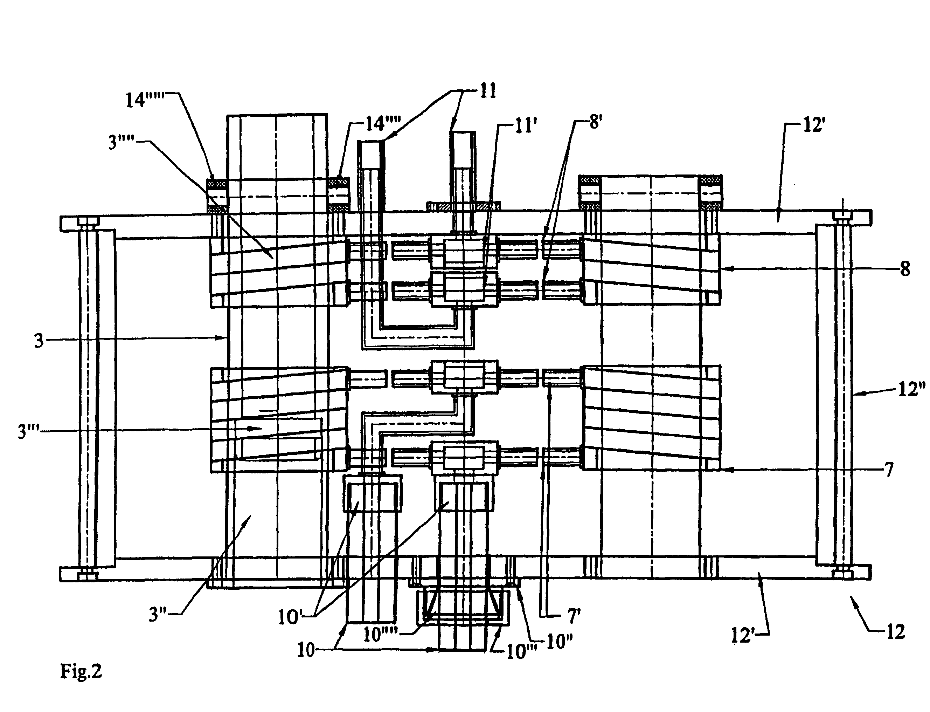

Le branchement des lignes 10 sur les embouts de connexion des portions centrales 10' pourra par exemple s'effectuer au moyen d'un ensemble de maintien et de fixation autobloquant et isolant thermiquement, tel que représenté sur la figure 2. Cet ensemble comprend une douille 10" solidaire de l'embout correspondant et pourvue d'une ouverture tronconique destinée à recevoir l'extrémité du conduit de la ligne 10. Un insert annulaire 10''', à section en coin, et par exemple en deux parties, est enfiché à force entre le conduit et la face interne de l'ouverture de la douille sous l'action d'un écrou 10"" s'engageant sur un filetage extérieur ménagé sur la douille 10" (voir figure 2).

L'insert 10''' consistera en un matériau rigide à propriété d'isolation thermique et le montage précité assurera le maintien et le blocage du conduit de la ligne 10, ainsi qu'une rigidification de la structure d'ensemble du module 1.

Une alimentation centrale par rapport à l'ensemble de réacteurs 2 permet d'obtenir une distribution égale entre les différents échangeurs 7 et condenseurs 8 et donc des transferts caloriques équivalents au niveau des différents réacteurs 2.

En outre, les directions de branchement d'alimentation opposées (figure 2 : vers le bas pour les échangeurs 7 et vers le haut pour les condenseurs 8) évite tout contact entre les deux circuits de circulation et empêche tout transfert calorique perturbateur entre eux.

Avantageusement, les échangeurs 7 et condenseurs 8, avec leurs portions de connection et de distribution 10', 11', pourront être réalisés en cuivre nickelé.

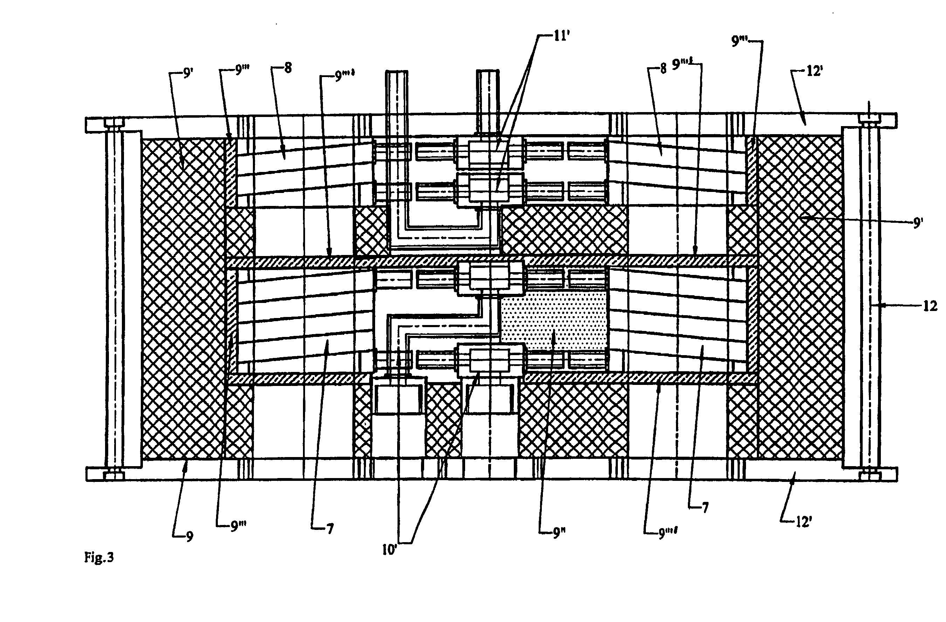

Comme le montrent les figures 3 à 5 des dessins annexés, le module 1, et plus particulièrement la structure isolante 9, présente une forme extérieure en palet, autorisant un accès aux embases 6 et laissant les têtes d'injection 5 dégagées. Ladite structure est montée et comprise entre deux plateaux discoïdaux séparés parallèles 12' reliés par des entretoises 12" et formant ensemble une structure d'assemblage et de support 12 sur laquelle sont montés les corps tubulaires 3 des réacteurs de synthèse 2, ladite structure 12 étant, le cas échéant, recouverte ou entourée phériphériquement ou sur toute sa face extérieure d'un film, d'une feuille, d'une plaque ou analogue en un matériau réfléchissant le rayonnement thermique et présentant des propriétés pare-vapeur et ladite structure 12 portant éventuellement lesdits échangeurs 7 et/ou condenseurs 8 et/ou une partie de leurs lignes d'alimentation et d'évacuation 10, 11.

Ces derniers peuvent, notamment en ce qui concerne les lignes d'alimentation, et le cas échéant d'évacuation des échangeurs 7, être préférentiellement isolées thermiquement sur toute leur longueur et le raccordement avec les portions centrales de connection et de distribution 10' pourra s'effectuer à l'intérieur de la masse de la structure isolante 9 pour limiter les déperditions vers l'extérieur (voir figure 3).

Les plateaux discoïdaux 12' pourront, le cas échéant, également être recouverts d'un matériau pare-vapeur.

Conformément à un mode de réalisation de l'invention, représenté plus particulièrement à la figure 3, la structure isolante 9 est constituée, d'une part, par des portions de matériau isolant rigide 9', par exemple de la mousse de polyisocyanurate, entourant périphériquement l'ensemble de réacteurs 2 et formant sensiblement un anneau autour de ce dernier et, d'autre part, par un matériau isolant 9" pulvérulent ou formé de billes de faible diamètre, par exemple de la rhyolite perlitique, contenu dans l'anneau formé par les portions de matériau isolant rigide 9' et remplissant les volumes libres entre les corps 3 des différents réacteurs 2, les échangeurs 7 et les condenseurs 8, l'ensemble des échangeurs 7, et le cas échéant, l'ensemble des condenseurs 8, pouvant être entouré périphériquement d'une ou de plusieurs couches de tissus de céramique 9''', formant parois isolantes de protection entre ces éléments 7, 8 et la face interne de l'anneau en matériau isolant rigide 9', les échangeurs 7 étant, le cas échéant, également pris en sandwich entre deux disques 9"" de tissu de céramique de manière à enfermer complètement lesdits échangeurs dans un cocon de tissu de céramique.

Les parois isolantes formées par le tissu de céramique (par exemple du type Papier Fiberfrax - nom déposé) permettent de générer au différentiel de températures entre les échangeurs 7 / condensateurs 8 et les portions de matériau isolant rigide 9' qui, outre l'isolation supplémentaire procurée, évitera de soumettre ces dernières à des températures trop excessives.

En variante, il peut être prévu de couler un matériau moussant isolant adapté entre les plateaux discoïdaux 12' et les réacteurs 2, matériau qui en s'expansant remplirait tous les volumes vides entres les éléments constitutifs.

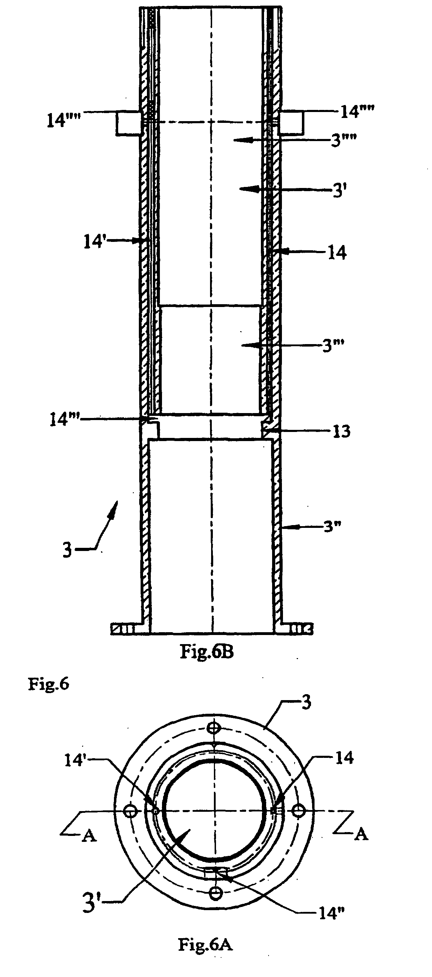

Comme le montrent les figures 1, 2, 4, 6A, 6B et 7 des dessins annexés, chaque corps tubulaire 3 comporte, d'une part, au niveau de son interface avec son prolongement inférieur 3", un anneau intérieur proéminent 13 formant butée circonférentielle pour le blocage et le serrage étanche périphérique de la paroi de rétention 4 du matériau formant support de synthèse, par exemple sous forme d'un filtre de forme discoïdale, et, d'autre part, plusieurs conduits longitudinaux 14, 14', 14" d'injection ou de passage, creusés dans l'épaisseur de sa paroi et s'étendant à partir du bord supérieur dudit corps 3, ou au moins d'une partie supérieure du corps 3 située en dehors de la structure isolante 9, jusqu'au niveau de la partie 3''' de la chambre de réaction 3' destinée à contenir le milieu et les composés réactionnels, en débouchant ou non au-dessus dudit anneau intérieur proéminent 13 dans un renfoncement annulaire 14"' creusé ou formé dans ladite paroi.

Parmi les conduits précités répartis circonférentiellement dans la paroi du corps 3, aux moins deux servent à l'acheminement de substances devant être délivrées directement dans la partie 3''' de la chambre 3' contenant le milieu réactionnel, légèrement au-dessus du filtre tissé formant paroi de rétention poreuse 4.

Ainsi, l'un 14 des conduits pourra servir à l'injection de la résine support de synthèse (le conduit 14 présentera un diamètre adapté à cette injection et évitera le bouchage d'autres conduits ou de la tête d'injection 5), un autre 14' à l'injection des synthons et/ou de réactifs de couplage (injection sans perte de substances en faible quantité et délivrance sans pollution directement dans le milieu). Un troisième conduit 14" servira à l'introduction d'un organe de contrôle de la température du milieu réactionnel, tel qu'un thermocouple filaire. Ce conduit 14" sera non débouchant et s'étendra préférentiellement jusqu'à une distance autorisant un positionnement de la tête de mesure dans une position médiane par rapport au milieu réactionnel.

On notera que la constitution des conduits 14 et 14' autorise un nettoyage efficace et complet par simple injection de solvant à travers eux (absence de surface extérieure, pas de partie non exposée au flux). En outre, le débouchement des conduits 14, 14' à proximité du filtre 4 autorise une évacuation de la majorité du milieu par ces conduits lors d'une mise sous pression gazeuse de la chambre 2', sans risque d'obturation (notamment pour le conduit 14).

Les conduits précités pourront avantageusement communiquer au niveau de leurs extrémités supérieures par des portions de conduits latéraux ou radiaux associés à des sites ou des embouts d'alimentation 14"" (figure 1).

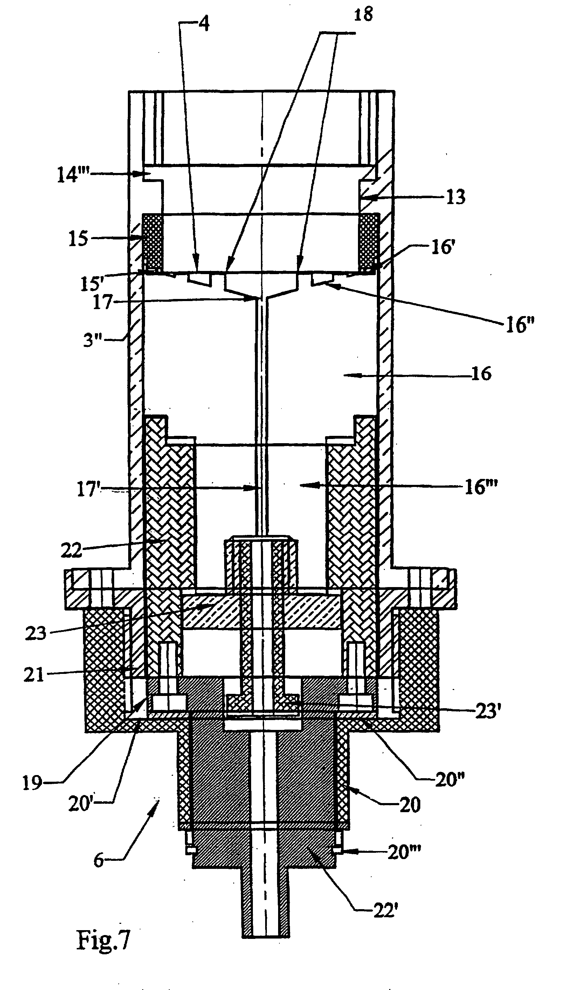

Pour obtenir une fermeture étanche dans la partie inférieure du réacteur, tout en ayant la possibilité de dégager une ouverture dans le prolongement 3" sur toute la largeur de ce dernier et de pouvoir interchanger rapidement la paroi de rétention poreuse 4, chaque embase 6 est avantageusement constituée, d'une part, par une bague d'appui et d'étanchéification 15 montée avec ajustement serré et blocage en translation en direction de la partie supérieure du réacteur 2 concerné, par exemple contre un anneau intérieur proéminent 13, dans le prolongement tubulaire 3" du corps tubulaire 3 dudit réacteur 2 et pourvu d'au moins une nervure 15' circonférentielle pour le pincement périphérique de la paroi 4, d'autre part, par un corps 16 de soutien et de compression de la paroi de rétention poreuse compressible 4 comportant, du côté dirigé vers ladite paroi 4, une surface d'appui circonférentielle extérieure plane 16' en regard de la ou des nervures 15' de la bague 15 et une surface conique intérieure 16" inclinée vers un orifice central d'évacuation 17 relié à un canal axial de vidange 17' creusé dans ledit corps 16 et pourvue de protubérances 18 pour le soutien de la paroi de rétention poreuse 4 et, enfin, par un ensemble amovible 19, 20 pour le serrage du corps de soutien et de compression 16 contre la bague d'appui 15 et le branchement d'un conduit ou tuyau sur la sortie du canal de vidange 17' (figures 1 et 7).

L'anneau intérieur proéminent 13 pourra être formé à l'interface du corps tubulaire 3 et de son prolongement inférieur 3", la bague 15 être montée à force dans ledit prolongement 3" et le corps 16 présenter un rebord extérieur venant en engagement coopérant avec un décrochement extérieur de forme complémentaire formé au niveau du bord inférieur de ladite bague 15.

On notera que le canal axial de vidange 17' pourra, le cas échéant, être utilisé pour l'injection de gaz en vue d'un bullage.

En outre, ledit canal 17' pourra également servir à l'extraction des produits de synthèse après leur clivage du support de synthèse.

Comme le montre aussi la figure 7 des dessins annexés, l'ensemble de serrage amovible peut être composé d'une pièce 19 de guidage et de transmission des efforts de poussée entre un écrou 20, préférentiellement à double filetage et à section en forme de Z, s'engageant par vissage avec une douille filetée 21 solidaire du prolongement 3" du corps tubulaire 3 et le corps 16 de soutien et de compression de la paroi de rétention 4, comprenant une première partie cylindrique creuse 22 venant en contact, avec coopération de forme, sur la face arrière du corps de soutien et de compression 16 en guidant axialement un prolongement arrière 16''' dudit corps 16 sur lequel est montée une pièce de connection 23 d'un embout de raccordement 23' d'un conduit ou tuyau destiné à être relié au canal axial de vidange 17', et une seconde partie cylindrique 22' comprenant une portion formant rondelle interposée entre la première partie cylindrique 22 et une surface d'application des efforts 20' de l'écrou 20 et une portion cylindrique prolongeant ladite portion formant rondelle et assurant le guidage de l'écrou 20 par rapport à la pièce 19 de guidage et de transmission d'efforts et le maintien et le guidage d'une portion proximale du conduit ou tuyau raccordé au canal axial de vidange 17'.

Eventuellement une rondelle de transmission d'effort 20" pourra être prévue entre la surface 20' de l'écrou 20 et la seconde partie cylindrique 22', cette dernière pouvant recevoir sur son extrémité s'étendant au-delà de l'écran 20, un circlip ou jonc d'arrêt 20''' engagé par ledit écrou lors de son dévissage et entraînant les seconde et première parties creuses 22 et 22', emprisonnant l'embout de raccordement 23', ce dernier entraînant à son tour la pièce 23 et le corps 16 dans un même mouvement de rétraction.

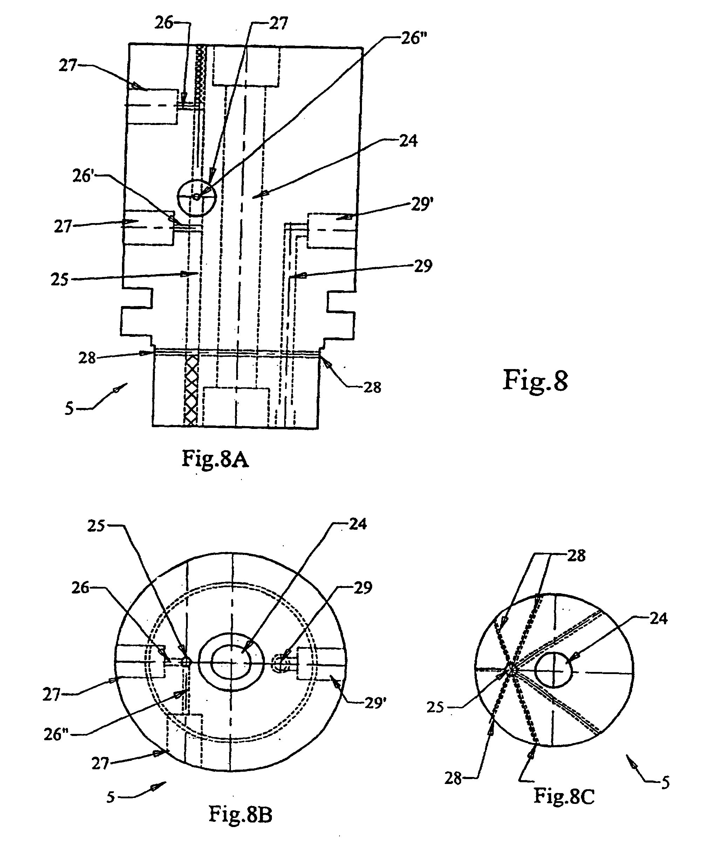

Conformément à une caractéristique de l'invention et comme le montrent les figures 1 et 8 des dessins annexés, la tête d'injection 5 comporte avantageusement, d'une part, un passage traversant axial 24 pour le montage avec faculté de rotation d'un élément en forme de tige 30', d'autre part, un canal d'injection principal 25 excentré et relié, en amont, à plusieurs canaux d'alimentation 26, 26', 26" prolongeant des sites latéraux 27 de raccordement de conduits ou de tuyaux de délivrance de fluide(s) et débouchant dans ledit canal d'injection 25 à des emplacements décalés le long de ce dernier et, en aval, à des canaux 28 de distribution radiale partant de l'extrémité aval dudit canal d'injection 25 et débouchant à proximité du bord supérieur de la face interne de la paroi de la partie supérieure du corps tubulaire 3 du réacteur 2 concerné, avec une répartition régulière et des pertes de charges sensiblement équivalentes, et, enfin, par un canal excentré 29 de détente et d'évacuation des fluides gazeux, débouchant sur la face inférieure de la tête d'injection 5 et relié à un site latéral 29' de raccordement extérieur correspondant.

Une telle réalisation desdits canaux 28 permet d'effectuer notamment, par injection répartie et distribuée de solvant adapté, un lavage par aspersion et léchage de la totalité de la surface interne de la paroi du corps tubulaire 3.

Pour obtenir une perte de charge sensiblement égale pour les différents canaux 28, ces derniers présenteront des valeurs de diamètres proportionnelles à leurs longueurs (rapport constant longueur/diamètre).

Le canal d'alimentation 26 débouchant le plus en amont (par rapport au sens d'injection) sur le canal d'injection principal 25 sera avantageusement réservé à l'injection de solvant, notamment de solvant de lavage et de rinçage, ce qui permettra de nettoyer le canal 25 sur toute sa longueur et de constituer des tampons liquides dans ce dernier, les canaux d'alimentation 26, 26' et 26" et les canaux 28 pouvant être maintenus pendant toute la durée d'une phase ou d'une procédure de synthèse, limitant les rétrocontaminations et pouvant être injectés dans la chambre 3' après la phase de synthèse sous la poussée d'une quantité de solvant supplémentaire.

Le canal d'alimentation 29 fera principalement office de sortie de détente pour les gaz présents ou se formant durant les réactions de synthèse et, le cas échéant, de canal de mise sous pression de la chambre 3' lors de l'expulsion et de l'extraction de produits contenus dans celle-ci.

La mise sous pression du réacteur 2 peut également être effectuée par l'intermédiaire du canal d'injection des solvants 26, qui offre en outre l'avantage d'un nettoyage aisé et la possibilité de mise en place de tampons liquides.

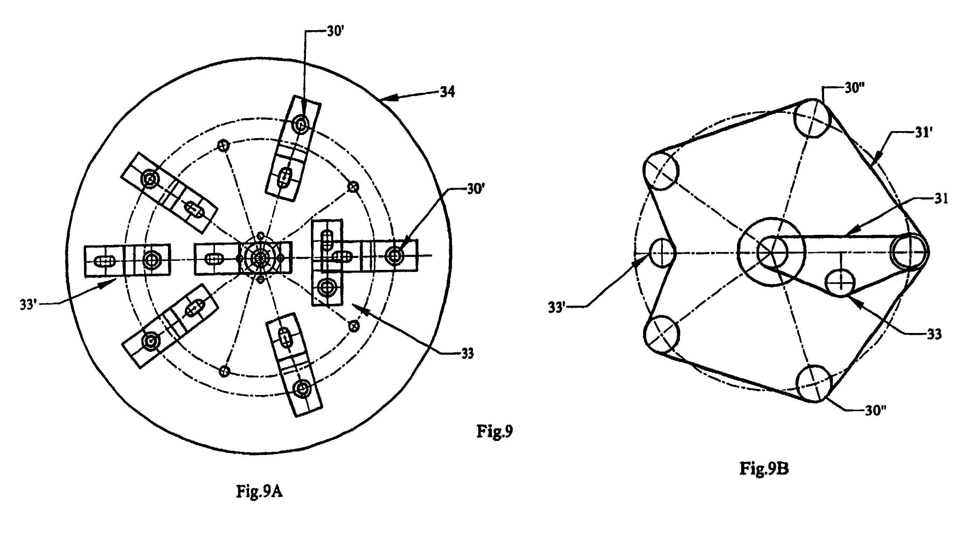

Pour pouvoir activer la réaction par mélangeage, désagglomerer les substances décantées et homogénéiser le milieu réactionnel, quel que soit l'état d'agglomération de ce dernier, chaque réacteur 2 est pourvu d'un organe rotatif 30 d'agitation mécanique du milieu ou mélange contenu dans la chambre de réaction 3' concernée, sous la forme d'une hélice située à faible distance au-dessus de la paroi de rétention 4 du support de synthèse et montée sur l'extrémité d'une tige 30' formant arbre ou axe traversant la tête d'injection 5 au niveau d'un passage axial 24 adapté et pourvue à son extrémité opposée d'une poulie crantée 30" ou d'un élément similaire pour son entraînement par un organe 31' de transmission et de distribution de mouvement, par exemple du type courroie crantée, reliant entre elles les poulies 30" des organes d'agitation 30 des différents réacteurs 2 du module 1, la rotation synchrone des différents organes d'agitation 30 étant provoquée par un moteur à vitesse variable 32 entraînant directement ou indirectement ledit organe de transmission et de distribution 31, et monté, ensemble avec lesdites poulies 30" et ledit organe 31, ainsi qu'éventuellement avec des poulies de renvoi et un ou des tendeur(s) de courroie 33, 33' sur une structure support 34 rapportée, de manière amovible, sur le module 1 (figures 1, 9A et 9B).

Les pales de l'hélice 30 seront avantageusement inclinées pour présenter un bord inférieur situé en avant par rapport au sens de rotation et ladite hélice 30, ainsi que la partie inférieure de la tige 30', notamment celle plongée dans le milieu réactionnel, sont revêtues d'un matériau chimiquement résistant et isolant thermiquement

On notera que la mise en oeuvre d'une hélice 30 décalée légèrement par rapport à la surface de la paroi 4 et pouvant être entraînée à des vitesses différentes, permet un décompactage plus efficace qu'un simple bullage tout en ne broyant pas le support de synthèse et les produits qui y sont attachés, comme le ferait un barreau magnétique.

La tige 30' sera, bien entendu, montée au niveau du passage axial 24 dans des paliers hermétiquement étanches.

Comme le montre les figures 1 et 9B des dessins annexés, le moteur 32 pourra, pour réduire l'encombrement total, être disposé entre la structure support 34, par exemple en forme de plateau, et le plateau discoïdal supérieur 12' de la structure support 12 du module 1 et la transmission s'effectuer sur deux étages, un premier étage comprenant une courroie primaire 31 pour la transmission entre l'axe ou l'arbre du moteur 32 et une poulie d'entraînement principale ou de renvoi montée coaxialement sur une tige 30' avec une poulie secondaire 30" décalée longitudinalement, ladite poulie secondaire 30" transmettant le mouvement aux autres poulies 30" (montées sur des tiges 30' pourvues d'organes 30) par l'organe de transmission 31' (courroie de distribution) et formant avec elles et ce dernier le second étage de transmission.

La structure support 34, ainsi que les éléments constitutifs de la structure support 12, pourront par exemple être réalisés en aluminium ou en un alliage d'aluminium anodisé.

Le module 1 décrit ci-dessus et dont une forme de réalisation est représentée sur les figures 1 à 9 des dessins annexés, est destiné à constituer l'élément modulaire fondamental d'un appareil de synthèse, de molécules organiques ou autres, seul ou associé à d'autres modules 1 du même type.

L'homme du métier notera en particulier la polyvalence d'utilisation d'un tel module 1 en termes de technique ou de protocole de synthèse pouvant être mis en oeuvre (chimie combinatoire, parallèle ou autre) et de variétés d'environnements matériels pouvant être construits autour d'un tel ou de tels modules 1 (circuits d'injection, de vidange, de détente, de mise sous pression, de chauffage, de refroidissement, de réfrigération, ...).

En effet, pour autant que les attributions en termes de natures des connections et de destinations des sites d'injection, d'alimentation et d'évacuation, soient respectées, ledit module 1 pourra servir d'instrument ou d'outil de synthèse dans des applications très diverses.

La présente invention a également pour objet un appareil pour la synthèse de molécules organiques en phase solide, à fonctionnement automatique ou semi-automatique comprenant au moins un module 1 tel que décrit précédemment.

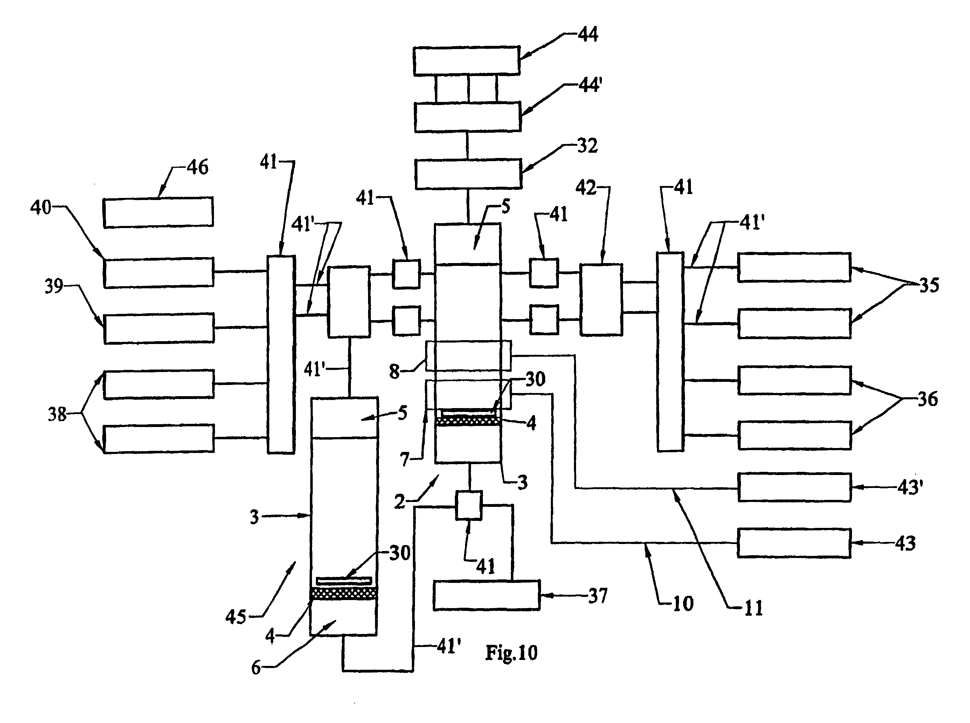

Comme le montre schématiquement la figure 10 des dessins annexés, dans un tel appareil ledit ou lesdits module(s) 1 pourront, par exemple, dans une forme de réalisation non limitative, être reliés ou branchés à, d'une part, au niveau des réacteurs 2, des réservoirs 35, 36, 37, 38, 39, 40 de solvant(s), de composés ou substances élémentaires pour les synthèses, de substance support de synthèse, de réactifs, de vidange, de récupération de déchets, de détente ou analogue, par l'intermédiaire d'un réseau de distribution et de transfert constitué d'un réseau de conduits ou de tuyaux 41' interconnectés avec des unités 41 monovoie ou multivoies de vannes à membranes, intégrant également des doseurs volumétriques 42, le déplacement des fluides dans ledit réseau s'effectuant sous l'action de gaz sous pression, par exemple de l'argon ou de l'azote, dont l'application pour la poussée des différents segments fluidiques est contrôlée par des actionnements séquentiels déterminés des unités de vannes 41 adaptées, les temps d'ouvertures desdites vannes déterminant les volumes transférés, et, d'autre part, au niveau des échangeurs 7 et condenseurs 8, des unités d'alimentation 43, 43' en fluide(s) caloriporteur(s) chaud ou froid par des circuits d'alimentation adaptés formés de lignes d'alimentation et d'évacuation 10, 11, ledit appareil comprenant en outre une unité informatique 44 de commande et de gestion de l'actionnement des différentes unités de vannes à membrane 41 et du fonctionnement des unités d'alimentation 43, 43' en fluide(s) gazeux caloriporteur(s), par l'intermédiaire de circuits d'interface et de multiplexage adaptés 44', autorisant un paramétrage en termes de séquences de synthèse et une sélection entre un fonctionnement entièrement automatique ou semi-automatique pas à pas dudit appareil.

Pour des raisons de simplicité et de facilité de compréhension, la figure 10 des dessins annexés ne comporte qu'un seul réacteur 2, étant noté que chaque réacteur 2' d'un module 1 présentera des connections et des branchements similaires.

Sur la figure 10, on relève notamment :
- divers réservoirs 35 de réactifs de déprotection ou autre ;
- divers réservoirs 36 de synthons, de synthons secondaires et de réactifs de couplage ;
- un ou des réservoirs 37 de collecte de déchets, associés à une unité de séparation et d'extraction de la phase liquide (non représentée) ;
- un système d'entrée/sortie 38 de la résine support de synthèse relié au conduit 14 (introduction de résine vierge au début, clivage, mélange/distribution, transfert...) ;
- des réservoirs 39 de solvants de lavage ;
- un réservoir de détente 40 ;
- un réservoir ou une source 46 de gaz inerte sous pression, pour le transfert par poussée gazeuse des fluides dans les différents circuits de distribution et le vidage sous pression des différents contenants, les connexions entre cette source ou ce réservoir 46 n'étant pas représentées pour des raisons de simplification.

Sur la figure 10 ne sont pas non plus représentés l'interface de dialogue et de programmation de l'unité informatique 44, les diverses connexions des circuits 44' avec les différents organes à commander (notamment les unités de vannes 41), différents modules de contrôle (contrôle du reflux, de la température ou analogue), nécessaires au fonctionnement automatique de l'appareil, et dont les constitutions sont connues de l'homme du métier.

Une structure d'appareil de synthèse de molécules pouvant servir de base pour la conception et la réalisation d'une structure d'appareil selon l'invention est en particulier décrite dans la demande de brevet français n° 2 664 602 précitée, notamment en relation avec les figures 2 et 3 de cette dernière.

En outre, les unités de vannes 41 présenteront préférentiellement une constitution similaire à celles décrites et représentées dans la demande de brevet français n° 2 664 671.

De manière avantageuse, l'unité informatique 44 contrôle également le fonctionnement du moteur 32 entraînant les organes d'agitation mécanique 30 sous forme d'hélices, avec commande contrôlée d'au moins deux vitesses de rotation différentes, à savoir une vitesse faible de mise en suspension et d'homogénéisation du mélange réactionnel et une vitesse élevée pour la génération d'un vortex destiné à assurer le décompactage du support de synthèse.

La génération d'un vortex permettra par choix des agglomérats présents entre eux et contre la paroi interne de la chambre de réaction 3' une désagglomération douce et progressive, sans cassure, ni broyage.

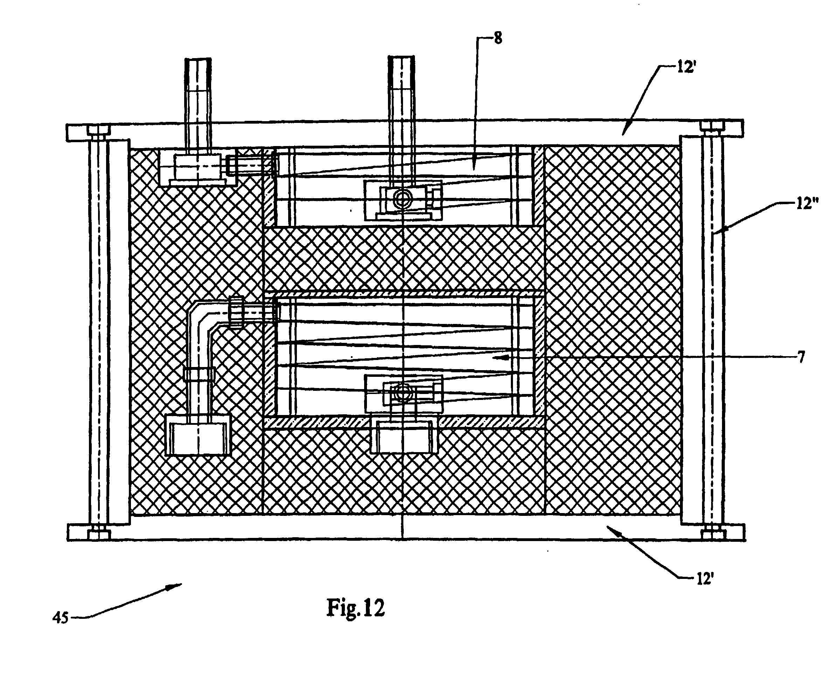

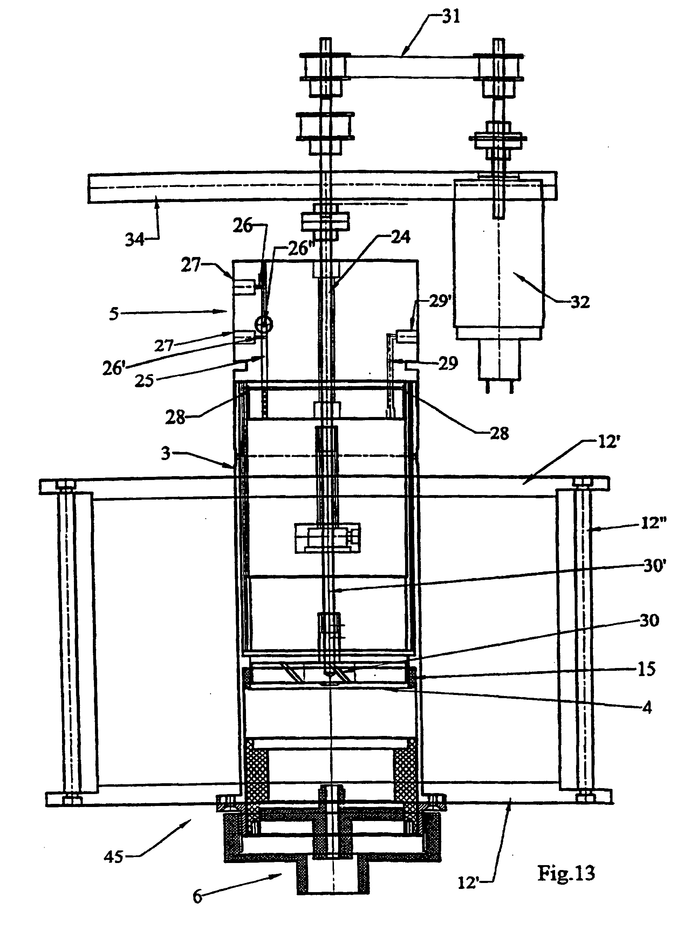

Comme le montrent les figures 10 à 13 des dessins annexés et conformément à une caractéristique complémentaire de l'invention, l'appareil de synthèse peut, en outre, comporter plusieurs modules 1 et en ce qu'à chaque module 1 est associé un contenant 45 formant chambre d'échange et de distribution, dont le volume interne correspond à la somme des volumes internes des réacteurs 2 du module 1 auquel il est associé, dont la constitution est identique à celles desdits réacteurs 2 à l'exception de la taille des éléments constitutifs, pouvant être relié auxdits réacteurs 2 par une portion du réseau de distribution et de transfert comprenant au moins une unité multivoies 41 de vannes à membranes et, le cas échéant, pourvu d'un organe d'agitation mécanique 30, d'un échangeur thermique 7, d'un condenseur 8 et d'une isolation thermique sur une partie au moins de son corps tubulaire 3.

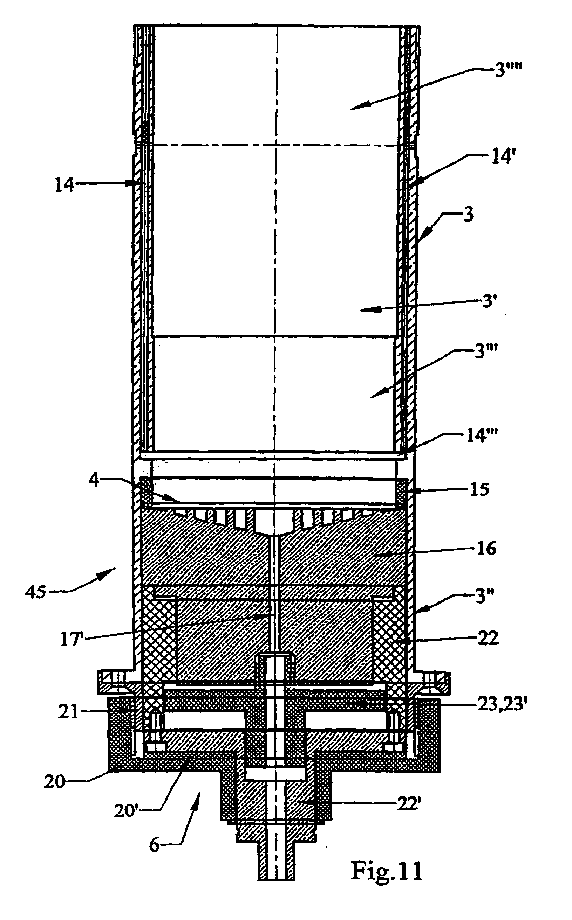

Sur les figures 11 à 13, les éléments constitutifs du contenant 45 correspondant aux éléments constitutifs analogues d'un réacteur 2, portent les mêmes références que ceux-ci, bien que leur conformation, forme et dimensions puissent être différentes.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Module pour la synthèse de molécules, notamment organiques, sur ou en phase solide, **caractérisé en ce qu'**il est principalement constitué par plusieurs, préférentiellement au moins deux et au plus dix, réacteurs de synthèse (2) séparés, arrangés selon une disposition circulaire avec une répartition équiangulaire et formés, chacun, d'un corps tubulaire (3) formant une chambre de réaction (3') délimitée dans sa partie inférieure par une paroi poreuse amovible (4), destinée à retenir le matériau formant support de synthèse, d'une tête (5) d'injection et de détente formant bouchon de fermeture supérieur pour le corps tubulaire (3), et d'une embase (6) de fermeture et de vidange montée de manière amovible dans un prolongement inférieur (3") du corps tubulaire (3) et assurant le maintien périphérique étanche de la paroi de rétention (4), chaque réacteur (2) étant pourvu d'un échangeur thermique (7) en contact intime périphérique avec le corps tubulaire (3) au moins au niveau de la partie (3''') de la chambre (3') destinée à contenir le milieu et les composés réactionnels et d'un condenseur (8) en contact intime périphérique avec le corps (3) au niveau d'une partie (3"") de la chambre (3') s'étendant au-dessus de celle (3''') contenant le milieu et les composés réactionnels et en-dessous de la tête d'injection (5), et ledit ensemble de réacteurs (2) étant monté dans une structure isolante (9) entourant lesdits réacteurs (2) au moins au niveau desdits échangeurs (7) et desdits condenseurs (8), l'action de ces derniers étant similaire pour tous les réacteurs (2) du module (1) et l'isolation étant homogène pour l'ensemble des réacteurs (2), de telle manière que lesdits réacteurs (2) soient soumis en permanence à des conditions thermiques identiques.

2. Module selon la revendication 1, **caractérisé en ce qu'**il comprend entre trois et sept réacteurs de synthèse (2) et **en ce que** le condenseur (8) et l'échangeur (7) d'un même réacteur (2) sont physiquement séparés, le cas échéant avec interposition d'un matériau isolant, et reliés à des lignes (10, 11) d'alimentation et d'évacuation de fluide(s) caloporteur(s) distinctes, la température du fluide, préférentiellement liquide, pour les condenseurs (8) pouvant varier de la température ambiante à environ 15° C et la température du fluide gazeux pour les échangeurs (7) pouvant varier entre environ - 80° C et environ + 100° C.

3. Module selon l'une quelconque des revendications 1 et 2, **caractérisé en ce que** la structure isolante (9) présente une forme extérieure en palet, autorisant un accès aux embases (6) et laissant les têtes d'injection (5) dégagées, et est comprise entre deux plateaux discoïdaux séparés parallèles (12') reliés par des entretoises (12") et formant ensemble une structure d'assemblage et de support (12) sur laquelle sont montés les corps tubulaires (3) des réacteurs de synthèse (2), ladite structure (12) étant, le cas échéant, recouverte ou entourée phériphériquement ou sur toute sa face extérieure d'un film, d'une feuille, d'une plaque ou analogue en un matériau réfléchissant le rayonnement thermique et présentant des propriétés pare-vapeur et ladite structure (12) portant éventuellement lesdits échangeurs (7) et/ou condenseurs (8) et/ou une partie de leurs lignes d'alimentation et d'évacuation (10, 11).

4. Module selon l'une quelconque des revendications 1 à 3, **caractérisé en ce que** la structure isolante (9) est constituée, d'une part, par des portions de matériau isolant rigide (9'), par exemple de la mousse de polyisocyanurate, entourant périphériquement l'ensemble de réacteurs (2) et formant sensiblement un anneau autour de ce dernier et, d'autre part, par un matériau isolant (9") pulvérulent ou formé de billes de faible diamètre, par exemple de la rhyolite perlitique, contenu dans l'anneau formé par les portions de matériau isolant rigide (9') et remplissant les volumes libres entre les corps (3) des différents réacteurs (2), l'ensemble des échangeurs (7), et le cas échéant, l'ensemble des condenseurs (8), pouvant être entouré périphériquement d'une ou de plusieurs couches de tissus de céramique (9'''), formant parois isolantes de protection entre ces éléments (7, 8) et la face interne de l'anneau en matériau isolant rigide (9'), les échangeurs (7) étant, le cas échéant, également pris en sandwich entre deux disques (9"") de tissu de céramique de manière à enfermer complètement lesdits échangeurs (7) dans un cocon de tissu de céramique.

5. Module selon l'une quelconque des revendications 1 à 4, **caractérisé en ce que** les condenseurs (8) et les échangeurs (7) sont constitués, chacun, par une pluralité de spires hélicoïdales adjacentes d'un conduit métallique à section rectangulaire ou carrée, les embouts (7', 8') d'alimentation et d'évacuation de tous les condenseurs (8) et échangeurs (7) étant dirigés radialement vers l'intérieur de la disposition circulaire formée par l'ensemble de réacteurs (2) et raccordés à des portions centrales (10', 11') de connection et de distribution radiale de lignes d'alimentation et d'évacuation (10, 11) de fluide(s) caloporteur(s), les lignes d'alimentation et d'évacuation (10, 11) se branchant sur lesdites portions centrales de connection et de distribution (10', 11') par les deux côtés ou faces opposé(e)s (1', 1") dudit module (1) et la configuration desdites portions centrales (10', 11') entraînant des pertes de charge équivalentes et des chemins de circulation équivalents, d'une part, pour tous les condenseurs (8) et, d'autre part, pour tous les échangeurs (7).

6. Module selon l'une quelconque des revendications 1 à 5, **caractérisé en ce que** chaque corps tubulaire (3) comporte, d'une part, au niveau de son interface avec son prolongement inférieur (3"), un anneau intérieur proéminent (13) formant butée circonférentielle pour le blocage et le serrage étanche périphérique de la paroi de rétention (4) du matériau formant support de synthèse, par exemple sous forme d'un filtre de forme discoïdale, et, d'autre part, plusieurs conduits longitudinaux (14, 14', 14") d'injection ou de passage, creusés dans l'épaisseur de sa paroi et s'étendant à partir du bord supérieur dudit corps (3), ou au moins d'une partie supérieure du corps (3) située en dehors de la structure isolante (9), jusqu'au niveau de la partie (3''') de la chambre de réaction (3') destinée à contenir le milieu et les composés réactionnels, en débouchant ou non au-dessus dudit anneau intérieur proéminent (13) dans un renfoncement annulaire (14''') creusé ou formé dans ladite paroi.

7. Module selon l'une quelconque des revendications 1 à 6, **caractérisé en ce que** chaque embase (6) de fermeture et de vidange est constituée, d'une part, par une bague d'appui et d'étanchéification (15) montée avec ajustement serré et blocage en translation en direction de la partie supérieure du réacteur (2) concerné, par exemple contre un anneau intérieur proéminent (13), dans le prolongement tubulaire (3") du corps tubulaire (3) dudit réacteur (2) et pourvu d'au moins une nervure (15') circonférentielle pour le pincement périphérique de la paroi (4), d'autre part, par un corps (16) de soutien et de compression de la paroi de rétention poreuse compressible (4) comportant, du côté dirigé vers ladite paroi (4), une surface d'appui circonférentielle extérieure plane (16') en regard de la ou des nervures (15') de la bague (15) et une surface conique intérieure (16") inclinée vers un orifice central d'évacuation (17) relié à un canal axial de vidange (17') creusé dans ledit corps (16) et pourvue de protubérances (18) pour le soutien de la paroi de rétention poreuse (4) et, enfin, par un ensemble amovible (19, 20) pour le serrage du corps de soutien et de compression (16) contre la bague d'appui (15) et le branchement d'un conduit ou tuyau sur la sortie du canal de vidange (17').

8. Module selon la revendication 7, **caractérisé en ce que** l'ensemble de serrage amovible est composé d'une pièce (19) de guidage et de transmission des efforts de poussée entre un écrou (20), préférentiellement à double filetage et à section en forme de Z, s'engageant par vissage avec une douille filetée (21) solidaire du prolongement (3") du corps tubulaire (3) et le corps (16) de soutien et de compression de la paroi de rétention (4), comprenant une première partie cylindrique creuse (22) venant en contact, avec coopération de forme, sur la face arrière du corps de soutien et de compression (16) en guidant axialement un prolongement arrière (16''') dudit corps (16) sur lequel est montée une pièce de connection (23) d'un embout de raccordement (23') d'un conduit ou tuyau destiné à être relié au canal axial de vidange (17'), et une seconde partie cylindrique (22') comprenant une portion formant rondelle interposée entre la première partie cylindrique (22) et une surface d'application des efforts (20') de l'écrou (20) et une portion cylindrique prolongeant ladite portion formant rondelle et assurant le guidage de l'écrou (20) par rapport à la pièce (19) de guidage et de transmission d'efforts et le maintien et le guidage d'une portion proximale du conduit ou tuyau raccordé au canal axial de vidange (17').

9. Module selon l'une quelconque des revendications 1 à 8, **caractérisé en ce que** la tête d'injection (5) comporte, d'une part, un passage traversant axial (24) pour le montage avec faculté de rotation d'un élément en forme de tige (30'), d'autre part, un canal d'injection principal (25) excentré et relié, en amont, à plusieurs canaux d'alimentation (26, 26', 26") prolongeant des sites latéraux (27) de raccordement de conduits ou de tuyaux de délivrance de fluide(s) et débouchant dans ledit canal d'injection (25) à des emplacements décalés le long de ce dernier et, en aval, à des canaux (28) de distribution radiale partant de l'extrémité aval dudit canal d'injection (25) et débouchant à proximité du bord supérieur de la face interne de la paroi de la partie supérieure du corps tubulaire (3) du réacteur (2) concerné, avec une répartition régulière et des pertes de charges sensiblement équivalentes, et, enfin, par un canal excentré (29) de détente et d'évacuation des fluides gazeux, débouchant sur la face inférieure de la tête d'injection (5) et relié à un site latéral (29') de raccordement extérieur correspondant.

10. Module selon l'une quelconque des revendications 1 à 9, **caractérisé en ce que** chaque réacteur (2) est pourvu d'un organe rotatif (30) d'agitation mécanique du milieu ou mélange contenu dans la chambre de réaction (3') concernée, sous la forme d'une hélice située à faible distance au-dessus de la paroi de rétention (4) du support de synthèse et montée sur l'extrémité d'une tige (30') formant arbre ou axe traversant la tête d'injection (5) au niveau d'un passage axial (24) adapté et pourvue à son extrémité opposée d'une poulie crantée (30") ou d'un élément similaire pour son entraînement par un organe (31') de transmission et de distribution de mouvement, par exemple du type courroie crantée, reliant entre elles les poulies (30") des organes d'agitation (30) des différents réacteurs (2) du module (1), la rotation synchrone des différents organes d'agitation (30) étant provoquée par un moteur à vitesse variable (32) entraînant directement ou indirectement ledit organe de transmission et de distribution (31'), et monté, ensemble avec lesdites poulies (30") et ledit organe (31'), ainsi qu'éventuellement avec des poulies de renvoi et un ou des tendeur(s) de courroie (33, 33') sur une structure support (34) rapportée, de manière amovible, sur le module (1).

11. Module selon l'une quelconque des revendications 1, 3, 5 ou 10, **caractérisé en ce que** les corps tubulaires (3) des réacteurs (2) avec leurs prolongements (3 ") sont formés d'un seul tenant en polytrifluorchloréthylène, ainsi que les têtes d'injection (5), **en ce que** les échangeurs (7) et condenseurs (8), avec leurs portions de connection et de distribution associées (10' et 11'), sont réalisés en cuivre nickelé et **en ce que** les structures support (12 et 34) sont réalisées en aluminium ou en un alliage d'aluminium anodisé.

12. Appareil pour la synthèse de molécules organiques en phase solide, à fonctionnement automatique ou semi-automatique, **caractérisé en ce qu'**il comprend au moins un module (1) selon l'une quelconque des revendications 1 à 11.

13. Appareil selon la revendication 12, **caractérisé en ce qu'**au(x) module(s) (1) sont reliés, d'une part, au niveau des réacteurs (2), des réservoirs (35, 36, 37, 38, 39, 40) de solvant(s), de composés ou substances élémentaires pour les synthèses, de substance support de synthèse, de réactifs, de vidange, de récupération de déchets, de détente ou analogue, par l'intermédiaire d'un réseau de distribution et de transfert constitué d'un réseau de conduits ou de tuyaux (41') interconnectés avec des unités (41) monovoie ou multivoies de vannes à membranes, intégrant également des doseurs volumétriques (42), le déplacement des fluides dans ledit réseau s'effectuant sous l'action de gaz sous pression, par exemple de l'argon ou de l'azote, dont l'application pour la poussée des différents segments fluidiques est contrôlée par des actionnements séquentiels déterminés des unités de vannes (41) adaptées, les temps d'ouvertures desdites vannes déterminant les volumes transférés, et, d'autre part, au niveau des échangeurs (7) et condenseurs (8), des unités d'alimentation (43, 43') en fluide(s) caloriporteur(s) chaud ou froid par des circuits d'alimentation adaptés formés de lignes d'alimentation et d'évacuation (10, 11), ledit appareil comprenant en outre une unité informatique (44) de commande et de gestion de l'actionnement des différentes unités de vannes à membrane (41 ) et du fonctionnement des unités d'alimentation (43,43') en fluide(s) gazeux caloriporteur(s), par l'intermédiaire de circuits d'interface et de multiplexage adaptés (44'), autorisant un paramétrage en termes de séquences de synthèse et une sélection entre un fonctionnement entièrement automatique ou semi-automatique pas à pas dudit appareil.

14. Appareil selon la revendication 13, **caractérisé en ce que** l'unité informatique (44) contrôle également le fonctionnement du moteur (32) entraînant les organes d'agitation mécanique (30) sous forme d'hélices, avec commande contrôlée d'au moins deux vitesses de rotation différentes, à savoir une vitesse faible de mise en suspension et d'homogénéisation du mélange réactionnel et une vitesse élevée pour la génération d'un vortex destiné à assurer le décompactage du support de synthèse.

15. Appareil selon l'une quelconque des revendications 12 à 14, **caractérisé en ce qu'**il comporte plusieurs modules (1) et **en ce qu'**à chaque module (1) est associé un contenant (45) formant chambre d'échange et de distribution, dont le volume interne correspond à la somme des volumes internes des réacteurs (2) du module (1) auquel il est associé, dont la constitution est identique à celles desdits réacteurs (2) à l'exception de la taille des éléments constitutifs, pouvant être relié auxdits réacteurs (2) par une portion du réseau de distribution et de transfert comprenant au moins une unité multivoies (41) de vannes à membranes et, le cas échéant, pourvu d'un organe d'agitation mécanique (30), d'un échangeur thermique (7), d'un condenseur (8) et d'une isolation thermique sur une partie au moins de son corps tubulaire (3).

## Patentansprüche

1. Modul für die Synthese von Molekülen, insbesondere organischen, über oder in der festen Phase, **dadurch gekennzeichnet, dass** es hauptsächlich aus mehreren, vorzugsweise mindestens zwei und höchstens zehn, getrennten Synthesereaktoren (2) besteht, die gemäß einer kreisförmigen Anordnung mit einer Verteilung in gleichen Winkeln angeordnet sind und jeweils bestehen aus einem röhrenförmigen Körper (3), der eine Reaktionskammer (3') bildet, die in ihrem unteren Teil durch eine abnehmbare poröse Wand (4) begrenzt ist, welche das Material festhalten soll, das den Syntheseträger bildet, einem Einspritz- und Entspannungskopf (5), der einen oberen Verschlussstopfen für den röhrenförmigen Körper (3) bildet, und einem Verschluss- und Entleerungssockel (6), der in abnehmbarer Weise in einer unteren Verlängerung (3") des röhrenförmigen Körpers (3) montiert ist und das Dichthalten am Umfang der Haltewand (4) sicherstellt, wobei jeder Reaktor (2) versehen ist mit einem Wärmetauscher (7) in innigem Umfangskontakt mit dem röhrenförmigen Körper (3) zumindest auf der Höhe des Teils (3"') der Kammer (3'), der die Reaktionsumgebung und -verbindungen enthalten soll, und einem Kondensator (8) in innigem Umfangskontakt mit dem Körper (3) auf der Höhe eines Teils (3"") der Kammer (3'), der sich oberhalb von diesem (3"') erstreckt, welcher die Reaktionsumgebung und -verbindungen enthält, und unterhalb des Einspritzkopfs (5) liegt, wobei die Gesamtheit von Reaktoren (2) in einer isolierenden Struktur (9) montiert ist, die die Reaktoren (2) zumindest auf der Höhe der Austauscher (7) und der Kondensatoren (8) umgibt, wobei die Wirkung dieser letzteren für alle Reaktoren (2) des Moduls (1) ähnlich ist und die Isolation für die Gesamtheit der Reaktoren (2) homogen ist, so dass die Reaktoren (2) stets identischen Wärmebedingungen ausgesetzt sind.

2. Modul nach Anspruch 1, **dadurch gekennzeichnet, dass** es zwischen drei und sieben Synthesereaktoren (2) umfasst und dass der Kondensator (8) und der Austauscher (7) ein und desselben Reaktors (2) physikalisch getrennt sind, gegebenenfalls mit Einfügung eines Isolationsmaterials, und mit unterschiedlichen Leitungen (10, 11) zur Versorgung mit und zum Ablass von Wärmeübertragungsfluid(en) verbunden sind, wobei die Temperatur des Fluids, vorzugsweise einer Flüssigkeit, für die Kondensatoren (8) von der Umgebungstemperatur um ungefähr 15°C variieren kann und die Temperatur des gasförmigen Fluids für die Austauscher (7) zwischen ungefähr -80°C und ungefähr +100°C variieren kann.

3. Modul nach einem der Ansprüche 1 und 2, **dadurch gekennzeichnet, dass** die isolierende Struktur (9) eine äußere Puckform aufweist, die einen Zugang zu den Sockeln (6) gestattet und die Einspritzköpfe (5) frei lässt, und zwischen zwei scheibenförmigen, getrennten, parallelen Platten (12') enthalten ist, die durch Querstreben (12") verbunden sind und gemeinsam eine Montage- und Stützstruktur (12) bilden, auf der die röhrenförmigen Körper (3) der Synthesereaktoren (2) montiert sind, wobei die Struktur (12) gegebenenfalls auf dem Umfang oder auf ihrer gesamten Außenfläche mit einem Film, einer Folie, einer Platte oder einem Analogen aus einem Material, das die Wärmestrahlung reflektiert und Dampfschutzeigenschaften aufweist, bedeckt oder umgeben ist und die Struktur (12) eventuell die Austauscher (7) und/oder Kondensatoren (8) und/oder einen Teil ihrer Versorgungs- und Ablassleitungen (10, 11) trägt.

4. Modul nach einem der Ansprüche 1 bis 3, **dadurch gekennzeichnet, dass** die isolierende Struktur (9) einerseits aus Teilen aus einem starren Isolationsmaterial (9'), beispielsweise aus Polyisocyanuratschaum, das die Gesamtheit von Reaktoren (2) auf dem Umfang umgibt und im Wesentlichen einen Ring um diese letztere bildet, und andererseits aus einem Isolationsmaterial (9"), das gepulvert ist oder aus Kugeln mit geringem Durchmesser, beispielsweise aus perlitischem Rhyolith, besteht, welches in dem Ring enthalten ist, der aus den Teilen des starren Isolationsmaterials (9') besteht, und die freien Volumina zwischen den Körpern (3) der verschiedenen Reaktoren (2) füllt, besteht, wobei die Gesamtheit der Austauscher (7) und gegebenenfalls die Gesamtheit der Kondensatoren (8) auf dem Umfang von einer oder mehreren Schichten aus Keramikgeweben (9"') umgeben sein kann, die Isolationswände zum Schutz zwischen diesen Elementen (7, 8) und der Innenseite des Rings aus starrem Isolationsmaterial (9') bilden, wobei die Austauscher (7) gegebenenfalls auch zwischen zwei Scheiben (9"") aus Keramikgewebe eingefügt sind, um die Austauscher (7) vollständig in einem Kokon aus Keramikgewebe einzuschließen. 1 bis 4, dadurch

5. Modul nach einem der Ansprüche 1 bis 4, **dadurch gekennzeichnet, dass** die Kondensatoren (8) und die Austauscher (7) jeweils aus einer Vielzahl von benachbarten schraubenförmigen Windungen einer Metallleitung mit rechteckigem oder quadratischem Querschnitt bestehen, wobei die Ansatzstücke (7', 8') zur Versorgung und zum Entleeren aller Kondensatoren (8) und Austauscher (7) radial zur Innenseite der kreisförmigen Anordnung, die durch die Gesamtheit von Reaktoren (2) gebildet ist, gerichtet sind und mit zentralen Verbindungs- und Verteilungsteilen (10', 11') von Versorgungs- und Ablassleitungen (10, 11) für Wärmeübertragungsfluid(e) verbunden sind, wobei sich die Versorgungs- und Ablassleitungen (10, 11) an den zentralen Verbindungs- und Verteilungsteilen (10', 11') durch die zwei entgegengesetzten Seiten oder Flächen (1', 1") des Moduls (1) verzweigen und die Anordnung der zentralen Teile (10', 11') zu äquivalenten Druckverlusten und äquivalenten Zirkulationswegen einerseits für alle Kondensatoren (8) und andererseits für alle Austauscher (7) führt.

6. Modul nach einem der Ansprüche 1 bis 5, **dadurch gekennzeichnet, dass** jeder röhrenförmige Körper (3) einerseits auf der Höhe seiner Grenzfläche mit seiner unteren Verlängerung (3") einen inneren vorstehenden Ring (13), der einen Umfangsanschlag für das Blockieren und das dichte Einspannen am Umfang der Haltewand (4) des den Syntheseträger bildenden Materials, beispielsweise in Form eines scheibenförmigen Filters, bildet, und andererseits mehrere Einspritz- oder Durchlasslängsleitungen (14, 14', 14"), die in der Dicke seiner Wand ausgehöhlt sind und sich vom oberen Rand des Körpers (3) oder mindestens von einem oberen Teil des Körpers (3), der sich außerhalb der isolierenden Struktur (9) befindet, bis zur Höhe des Teils (3"') der Reaktionskammer (3'), der die Reaktionsumgebung und -verbindungen enthalten soll, erstrecken, indem sie oberhalb des inneren vorstehenden Rings (13) in einer ringförmigen Einbuchtung (14"'), die in der Wand ausgehöhlt oder ausgebildet ist, münden, umfasst.

7. Modul nach einem der Ansprüche 1 bis 6, **dadurch gekennzeichnet, dass** jeder Verschluss- und Entleerungssockel (6) einerseits aus einem Abstütz- und Dichtungsring (15), der mit eingespannter Einstellung und Translationssperrung in Richtung des oberen Teils des betreffenden Reaktors (2), beispielsweise gegen einen inneren vorstehenden Ring (13), in der röhrenförmigen Verlängerung (3") des röhrenförmigen Körpers (3) des Reaktors (2) montiert ist, und mit mindestens einer Umfangsrippe (15') für das Einklemmen der Wand (4) am Umfang versehen ist, andererseits aus einem Körper (16) zum Stützen und Zusammendrücken der porösen, komprimierbaren Haltewand (4), der auf der zur Wand (4) gerichteten Seite eine äußere ebene Umfangsstützfläche (16') gegenüber der (den) Rippe(n) (15') des Rings (15) und eine konische Innenfläche (16"), die gegen eine zentrale Ablassöffnung (17) geneigt ist, die mit einem axialen Entleerungskanal (17') verbunden ist, der in dem Körper (16) ausgehöhlt ist, und mit Vorsprüngen (18) für das Stützen der porösen Haltewand (4) versehen ist, umfasst, und schließlich aus einer abnehmbaren Baugruppe (19, 20) für das Einspannen des Stütz- und Druckkörpers (16) gegen den Stützring (15) und die Abzweigung einer Leitung oder eines Rohrs am Ausgang des Entleerungskanals (17') besteht.

8. Modul nach Anspruch 7, **dadurch gekennzeichnet, dass** die abnehmbare Einspannbaugruppe aus einem Stück (19) zur Führung und Übertragung der Schubkräfte zwischen.einer Mutter (20), vorzugsweise mit Doppelgewinde und mit Z-förmigem Querschnitt, welche durch Verschraubung mit einer Gewindehülse (21) in Eingriff kommt, die fest mit der Verlängerung (3") des röhrenförmigen Körpers (3) verbunden ist, und dem Stütz- und Druckkörper (16) der Haltewand (4) besteht, mit einem ersten hohlen zylindrischen Teil (22), der unter Zusammenwirken der Form mit der hinteren Seite des Stütz- und Druckkörpers (16) in Kontakt kommt, indem eine hintere Verlängerung (16"') des Körpers (16) axial geführt wird, an welcher ein Verbindungsstück (23) eines Verbindungsansatzstücks (23') einer Leitung oder eines Rohrs montiert ist, das mit dem axialen Entleerungskanal (17') verbunden werden soll, und einem zweiten zylindrischen Teil (22') mit einem eine Scheibe bildenden Teil, der zwischen den ersten zylindrischen Teil (22) und eine Fläche (20') zum Aufbringen der Kräfte der Mutter (20) eingefügt ist, und einem zylindrischen Teil, der den die Scheibe bildenden Teil verlängert und das Führen der Mutter (20) bezüglich des Stücks (19) zum Führen und Übertragen von Kräften und das Halten und die Führung eines nahen Teils der Leitung oder des Rohrs, das mit dem axialen Entleerungskanal (17') verbunden ist, sicherstellt.

9. Modul nach einem der Ansprüche 1 bis 8, **dadurch gekennzeichnet, dass** der Einspritzkopf (5) einerseits einen axialen Durchgang (24) für die Montage eines Elements in Form einer Stange (30') mit Rotationsfähigkeit, andererseits einen exzentrischen Haupteinspritzkanal (25), der stromaufwärts mit mehreren Versorgungskanälen (26, 26', 26") verbunden ist, die Seitenstellen (27) zur Verbindung von Leitungen oder Rohren zum Liefern von Fluid(en) verlängern und in den Einspritzkanal (25) an Stellen münden, die entlang dieses letzteren versetzt sind, und stromabwärts mit Kanälen (28) zur radialen Verteilung verbunden ist, die vom hinteren Ende des Einspritzkanals (25) ausgehen und in der Nähe des oberen Randes der Innenseite der Wand des oberen Teils des röhrenförmigen Körpers (3) des betreffenden Reaktors (2) münden, mit einer regelmäßigen Verteilung und im Wesentlichen äquivalenten Druckverlusten, und schließlich einen exzentrischen Kanal (29) zur Entspannung und zum Ablassen von gasförmigen Fluiden, der an der Innenseite des Einspritzkopfs (5) mündet und mit einer entsprechenden Seitenstelle (29') zur äußeren Verbindung verbunden ist, umfasst.

10. Modul nach einem der Ansprüche 1 bis 9, **dadurch gekennzeichnet, dass** jeder Reaktor (2) mit einer Dreheinrichtung (30) zum mechanischen Rühren der Umgebung oder des Gemisches, das in der betreffenden Reaktionskammer (3') enthalten ist, in Form einer Schraube versehen ist, die sich in geringem Abstand oberhalb der Haltewand (4) des Syntheseträgers befindet und am Ende einer Stange (30') montiert ist, die eine Welle oder Achse bildet, die den Einspritzkopf (5) auf der Höhe eines angepassten axialen Durchgangs (24) durchquert, und an ihrem entgegengesetzten Ende mit einer Zahnriemenscheibe (30") oder mit einem ähnlichen Element für ihren Antrieb durch eine Einrichtung (31') zur Übertragung und Verteilung einer Bewegung, beispielsweise vom Typ Zahnriemen, versehen ist, welche die Riemenscheiben (30") der Rühreinrichtungen (30) der verschiedenen Reaktoren (2) des Moduls (1) miteinander verbindet, wobei die synchrone Drehung der verschiedenen Rühreinrichtungen (30) durch einen Motor mit variabler Geschwindigkeit (32) hervorgerufen wird, der die Einrichtung (31') zur Übertragung und Verteilung direkt oder indirekt antreibt und gemeinsam mit den Riemenscheiben (30") und der Einrichtung (31') sowie eventuell mit Umlenkscheiben und (einem) Riemenspannglied(ern) (33, 33') an einer Trägerstruktur (34), die in abnehmbarer Weise an das Modul (1) angefügt ist, montiert ist.

11. Modul nach einem der Ansprüche 1, 3, 5 oder 10, **dadurch gekennzeichnet, dass** die röhrenförmigen Körper (3) der Reaktoren (2) mit ihren Verlängerungen (3") aus einem einzigen Stück aus Polytrifluorchlorethylen sowie die Einspritzköpfe (5) ausgebildet sind, und dass die Austauscher (7) und Kondensatoren (8) mit ihren zugehörigen Verbindungs- und Verteilungsteilen (10' und 11') aus vernickeltem Kupfer bestehen und dass die Trägerstrukturen (12 und 34) aus Aluminium oder aus einer anodisch oxidierten Aluminiumlegierung bestehen.

12. Vorrichtung für die Synthese von organischen Molekülen in der Feststoff-Phase mit automatischem oder halbautomatischem Betrieb, **dadurch gekennzeichnet, dass** es mindestens ein Modul (1) nach einem der Ansprüche 1 bis 11 umfasst.

13. Vorrichtung nach Anspruch 12, **dadurch gekennzeichnet, dass** mit dem (den) Modul(en) (1) einerseits auf der Höhe der Reaktoren (2) Behälter (35, 36, 37, 38, 39, 40) für Lösungsmittel, für elementare Verbindungen oder Substanzen für die Synthesen, für eine Syntheseträgersubstanz, für Reagenzien, zur Entleerung, zur Wiedergewinnung von Abfällen, zur Entspannung oder analogem, durch ein Netzwerk zum Verteilen und zum Transport, welches aus einem Netzwerk von Leitungen oder Rohren (41') besteht, die mit Einwegoder Mehrwegeinheiten (41) von Membranventilen verbunden sind, die auch Volumendosiervorrichtungen (42) integrieren, wobei die Verlagerung der Fluide in dem Netzwerk unter der Wirkung von Druckgas, beispielsweise Argon oder Stickstoff, stattfindet, dessen Aufbringung für den Schub der verschiedenen Fluidiksegmente durch bestimmte aufeinanderfolgende Betätigungen der angepassten Ventileinheiten (41) gesteuert wird, wobei die Öffnungszeiten der Ventile die transportierten Volumina bestimmen, und andererseits auf der Höhe der Austauscher (7) und Kondensatoren (8) mit Einheiten (43, 43') zur Versorgung mit heißem (heißen) oder kaltem (kalten) Wärmeübertragungsfluid(en) durch angepasste und Versorgungskreisläufe, die aus Versorgungs- und Ablassleitungen (10, 11) bestehen, verbunden sind, wobei das Gerät außerdem eine Datenverarbeitungseinheit (44) zur Steuerung und Lenkung der Betätigung der verschiedenen Membranventileinheiten (41) und der Funktion der Einheiten (43, 43') zur Versorgung mit gasförmigem (gasförmigen) Wärmeübertragungsfluid(en) durch angepasste Schnittstellenund Multiplexbetriebsschaltungen (44'), die eine Parametrierung hinsichtlich der Synthesesequenzen und eine Auswahl zwischen einem vollständig automatischen oder halbautomatischen, schrittweisen Betrieb des Geräts gestatten, umfasst.

14. Vorrichtung nach Anspruch 13, **dadurch gekennzeichnet, dass** die Datenverarbeitungseinheit (44) auch den Betrieb des Motors (32) steuert, der die mechanischen Rühreinrichtungen (30) in Form von Schrauben antreibt, mit gesteuerter Steuerung von mindestens zwei verschiedenen Rotationsgeschwindigkeiten, nämlich einer geringen Geschwindigkeit zum Suspendieren und zur Homogenisierung des Reaktionsgemisches und einer erhöhten Geschwindigkeit für die Erzeugung eines Wirbels, der die Zerlegung des Syntheseträgers sicherstellen soll.

15. Vorrichtung nach einem der Ansprüche 12 bis 14, **dadurch gekennzeichnet, dass** es mehrere Module (1) umfasst und dass mit jedem Modul (1) ein Behälter (45) verbunden ist, der eine Austausch- und Verteilungskammer bildet, deren Innenvolumen der Summe der Innenvolumina der Reaktoren (2) des Moduls (1) entspricht, mit dem er verbunden ist, dessen Aufbau zu jenen der Reaktoren (2) identisch ist, mit Ausnahme der Größe der Bauteile, der mit den Reaktoren (2) durch einen Teil des Verteilungs- und Transportnetzwerks mit mindestens einer Mehrwegeeinheit (41) von Membranventilen verbunden sein kann, und gegebenenfalls mit einer mechanischen Rühreinrichtung (30), einem Wärmetauscher (7), einem Kondensator (8) und einer Wärmeisolierung an zumindest einem Teil seines röhrenförmigen Körpers (3) versehen ist.

## Claims

1. Module for the synthesis of molecules, in particular organic molecules, on or in the solid phase, **characterised in that** it principally consists of a plurality of, preferably at least two and at most ten, separated synthesis reactors (2) which are arranged in a circular disposition with an equiangular distribution and each formed by a tubular body (3), forming a reaction chamber (3') delimited in its lower part by a removable porous wall (4), designed to retain the synthesis support material, an injection and expansion head (5) forming an upper closure plug for the tubular body (3), and a closure and drainage base (6) removably fitted in a lower extension (3") of the tubular body (3) and ensuring the tight peripheral holding of the retaining wall (4), each reactor (2) being provided with a heat exchanger (7) in close peripheral contact with the tubular body (3) at least in the region of the part (3''') of the chamber (3') intended to contain the reaction medium and compounds and of a condenser (8) in close peripheral contact with the body (3) in the region of a part (3"") of the chamber (3') extending above that (3"') containing the medium and the reaction compounds and beneath the injection head (5), and said assembly of reactors (2) being mounted in an insulating structure (9) surrounding said reactors (2) at least in the region of said heat exchangers (7) and said condensers (8), the action of the latter being of the same nature for all the reactors (2) of the module (1) and the insulation being uniform for all the reactors (2), in such a way that said reactors (2) are continuously subjected to identical thermal conditions.

2. Module according to claim 1, **characterised in that** it comprises between three and seven synthesis reactors (2) and **in that** the condenser (8) and the exchanger (7) of the same reactor (2) are physically separated, optionally with the insertion of an insulating material, and connected to supply and discharge lines (10, 11) for separate heat-exchanging fluid(s), the temperature of the fluid, preferably liquid, for the condensers (8) being able to vary from room temperature to approximately 15°C and the temperature of the gaseous fluid for the exchangers (7) being able to vary between approximately -80°C and approximately +100°C.

3. Module according to any one of claims 1 and 2, **characterised in that** the insulating structure (9) displays the external shape of a disc, allowing access to the bases (6) and leaving the injection heads (5) free, and is contained between two separate parallel discoidal plates (12') connected by crossbeams (12") and together forming an assembly and support structure (12) upon which the tubular bodies (3) of the synthesis reactors (2) are mounted, said structure (12) optionally being covered or surrounded peripherally or on its entire exterior face by a film, a sheet, a plate or the like made of a material which reflects thermal radiation and displays vapour barrier properties and said structure (12) possibly supporting said exchangers (7) and/or condensers (8) and/or a part of their supply and discharge lines (10, 11).

4. Module according to any one of claims 1 to 3, **characterised in that** the insulating structure (9) consists, on the one hand, of portions of rigid insulating material (9'), for example, of polyisocyanurate foam, peripherally surrounding the assembly of reactors (2) and substantially forming a ring round them and, on the other hand, of an insulating material (9") which is powdery or formed by small-diameter beads, for example of perlitic rhyolite, contained in the ring created by the portions of rigid insulating material (9') and filling the free spaces between the bodies (3) of the various reactors (2), all the exchangers (7) and optionally all the condensers (8) being able to be peripherally surrounded by one or more layers of ceramic fabric (9'''), forming insulating protection walls between these elements (7, 8) and the internal face of the rigid insulating material ring (9'), the exchangers (7) optionally also being sandwiched between two discs (9"") of ceramic fabric so as to completely enclose said exchangers (7) in a cocoon of ceramic fabric.

5. Module according to any one of claims 1 to 4, **characterised in that** the condensers (8) and the exchangers (7) each consist of a plurality of adjacent helical turns of a metal conduit of rectangular or square portion, the supply and discharge nozzles (7', 8') of all the condensers (8) and exchangers (7) being directed radially towards the interior of the circular arrangement formed by the assembly of reactors (2) and connected to central portions (10', 11') for connection and radial distribution of the supply and discharge lines (10, 11) of heat conveying fluid(s), the supply and discharge lines (10, 11) being connected to said central connection and distribution portions (10', 11') by the two opposite sides or faces (1', 1") of said module (1) and the configuration of said central portions (10', 11') leading to equivalent losses of pressure and equivalent paths of circulation, on the one hand, for all the condensers (8) and, on the other hand, for all the exchangers (7).

6. Module according to any one of claims 1 to 5, **characterised in that** each tubular body (3) comprises, on the one hand, in the region of its interface with its lower extension (3"), a protruding interior ring (13) forming a circumferential abutment for the locking and the tight peripheral gripping of the wall (4) retaining the material forming a synthesis support, for example in the form of a discoidal filter and, on the other hand, a plurality of longitudinal conduits (14, 14', 14") for injection or passage, hollowed into the thickness of its wall and extending from the upper edge of said body (3), or at least an upper part of the body (3), situated outside the insulating structure (9), to the region of the part (3''') of the reaction chamber (3') designed to contain the reaction medium and compounds, opening or not opening above said protruding interior ring (13) into an annular recess (14''') hollowed or shaped in said wall.

7. Module according to any one of claims 1 to 6, **characterised in that** each closure and drainage base (6) consists, on the one hand, of a sealing support ring (15) fitted with press fit and locked in translation in the direction of the upper part of the reactor (2) concerned, for example against a protruding interior ring (13), in the tubular extension (3") of the tubular body (3) of said reactor (2) and provided with at least one circumferential rib (15') for the peripheral pinching of the wall (4) and, on the other hand, of a support and compression body (16) for the compressible porous retaining wall (4) comprising, on the side directed towards said wall (4), a plane exterior circumferential support surface (16') facing the rib(s) (15') of the ring (15) and an internal conical surface (16") inclined towards a central discharge opening (17) connected to an axial discharge duct (17'), hollowed into said body (16) and provided with protuberances (18) for the support of the porous retaining wall (4) and, finally, of a removable assembly (19, 20) for gripping the support and compression body (16) against the support ring (15) and the connection of a conduit or a pipe to the outlet of the drainage duct (17').

8. Module according to claim 7, **characterised in that** the removable clamping construction is composed of a member (19) for guiding and transmitting the thrusts between a nut (20), preferably with a double thread and with a Z-shaped section, engaging by a screwed joint with a threaded insert (21) integral with the extension (3") of the tubular body (3) and the support and compression body (16) for the retaining wall (4), comprising a first hollow cylindrical part (22) coming into mating contact with the rear face of the support and compression body (16), axially guiding a rear extension (16"') of said body (16) upon which is mounted a connection piece (23) of a coupling nozzle (23') of a conduit or pipe designed to be connected to the axial drainage duct (17'), and a second cylindrical part (22') comprising a portion which forms a washer interposed between the first cylindrical part (22) and a surface for application of the force (20') of the nut (20), and a cylindrical portion extending said washer-forming portion and guiding the nut (20) relative to the part (19) for guiding and transmitting forces and holding and guiding a proximal portion of conduit or pipe coupled to the axial drainage duct (17').

9. Module according to any one of claims 1 to 8, **characterised in that** the injection head (5) comprises, on the one hand, an axial through-passage (24) for the rotatable mounting of a rod-shaped element (30') and, on the other hand, an eccentric principal injection duct (25) connected, upstream, to a plurality of supply ducts (26, 26', 26"), extending lateral sites (27) for the coupling of fluid discharge conduits or pipes and opening into said injection duct (25) at staggered locations along it and, downstream, to radial distribution ducts (28) from the downstream end of said injection duct (25) and opening near to the upper edge of the internal face of the wall of the upper part of the tubular body (3) of the reactor (2) concerned, with a uniform distribution and substantially equivalent drops in pressure, and finally, of an eccentric duct (29) for pressure-reduction and the discharge of gaseous fluids, opening onto the lower face of the injection head (5) and connected to a corresponding exterior lateral coupling site (29').

10. Module according to any one of claims 1 to 9, **characterised in that** each reactor (2) is provided with a rotating component (30) for mechanical agitation of the medium or mixture contained in the reaction chamber (3') concerned, in the form of a helix situated a short distance above the synthesis support retaining wall (4) and mounted on the end of a rod (30') forming a spindle or a shaft passing through the injection head (5) in the region of an appropriate axial duct (24) and provided, at its opposite end, with a notched pulley (30") or with a similar element for driving it by a movement transmitting and distributing element (31'), for example a notched belt, linking the pulleys (30") of the agitation component (30) of the various reactors (2) of the module (1), the various agitation components (30) being synchronously rotated by a variable-speed motor (32), directly or indirectly driving said transmission and distribution component (31'), and mounted, together with said pulleys (30") and said component (31') and possibly with the return pulleys and one or more belt tensioners (33, 33') on a support structure (34), removably attached to the module (1).

11. Module according to any one of claims 1, 3, 5 or 10, **characterised in that** the tubular bodies (3) of the reactors (2) with their extensions (3") are formed in one piece from polytrifluorochloroethylene, as well as the injection heads (5), **in that** the exchangers (7) and the condensers (8), with their associated connection and distribution portions (10' and 11'), are made of copper nickel and **in that** the support structures (12 and 34) are made from aluminium or from an oxidised aluminium alloy.

12. Apparatus for the synthesis of organic molecules in the solid phase, with automatic or semi-automatic operation, **characterised in that** it comprises at least one module (1) according to any one of claims 1 to 11.

13. Apparatus according to claim 12, **characterised in that** the module(s) (1) are connected, on the one hand, in the region of the reactors (2), by reservoirs (35, 36, 37, 38, 39, 40) of solvent(s), of compounds or elementary substances for the syntheses, of synthesis-supporting substance, of reagents, for drainage, waste recovery, pressure reduction or the like, through a distribution and transfer network consisting of a network of conduits or pipes (41') interconnected with one-way or multi-way diaphragm valve units (41), also incorporating volumetric feeders (42), the fluids in said network being displaced by pressurised gas, for example, argon or nitrogen, of which the application for thrusting the various fluid segments is controlled by predetermined sequential actuations of the appropriate valve units (41), the opening times of said valves determining the volumes which are transferred, and, on the other hand, in the region of the exchangers (7) and condensers (8), supply units (43, 43) for hot or cold heat-conveying fluid(s) through appropriate feed circuits formed by feed and discharge lines (10, 11), said apparatus further comprising a computer unit (44) for control and management of actuation of the various diaphragm valve units (41) and of functioning of the units (43, 43') supplying gaseous heat-conveying fluid(s), by means of an appropriate interface and multiplex transmission circuits (44'), allowing a parameterisation in terms of synthesis sequences and a choice between completely automatic or semi-automatic step-by-step operation of said apparatus.

14. Apparatus according to claim 13, **characterised in that** the computer unit (44) also controls operation of the motor (32) driving the mechanical agitation components (30) in the form of helices, with monitored control of at least two different speeds of rotation, namely a low speed for suspending and homogenising the reaction mixture and a high speed for generating a vortex designed to decompress the synthesis support.

15. Apparatus according to any one of claims 12 to 14, **characterised in that** it comprises a plurality of modules (1) and **in that** each module (1) is associated with a container (45) forming an exchange and distribution chamber, of which the internal volume corresponds to the sum of the internal volumes of the reactors (2) of the module (1) with which it is associated, of which the constitution is identical to those of said reactors (2), with the exception of the size of the constituent components, being able to be linked to said reactors (2) by a portion of the distribution and transfer network comprising at least one multi-way unit (41) of diaphragm valves and optionally provided with a mechanical mixing member (30), a heat exchanger (7), a condenser (8) and a thermal insulator on at least a part of its tubular body (3).
